# EUROPÄISCHE PATENTSCHRIFT

(11) **EP 3 134 775 B1**
(45) Veröffentlichungstag und Bekanntmachung des Hinweises auf die Patenterteilung: **09.05.2018**
(21) Anmeldenummer: 15741816.1
(22) Anmeldetag: 25.03.2015
(51) Int. Cl.: G05B 13/04, G05B 17/02, H01L 21/66

(54) **AUF MODELLIERUNG EINER BEIZLINIE BERUHENDE OPTIMIERUNG EINER SEQUENZ VON ZU BEIZENDEN BÄNDERN**
OPTIMIZATION OF A SEQUENCE OF STRIPS TO BE PICKLED, ON THE BASIS OF MODELLING OF A PICKLING LINE
OPTIMISATION D'UNE SÉQUENCE DE BANDES À DÉCAPER BASÉE SUR LA MODÉLISATION D'UNE LIGNE DE DÉCAPAGE

(30) Priorität: 24.04.2014 EP 14165815
(43) Veröffentlichungstag der Anmeldung: 01.03.2017
(73) Patentinhaber: Primetals Technologies Germany GmbH, 91052 Erlangen (DE)
(72) Erfinder: THEKALE, Alexander, 91058 Erlangen (DE); WALTER, Samuel, 91058 Erlangen (DE)
(74) Vertreter: Metals@Linz
(86) Internationale Anmeldenummer: PCT/EP2015/056344
(87) Internationale Veröffentlichungsnummer: WO 2015/161975

(56) Entgegenhaltungen:
- US-A1- 2005 222 781
- US-A1- 2006 200 265
- US-A1- 2010 036 514
- US-B1- 6 410 351

## Beschreibung

Die vorliegende Erfindung betrifft ein Betriebsverfahren für eine Beizlinie, in der eine Anzahl von zu beizenden Bändern gebeizt werden soll, die jeweils anfängliche Materialeigenschaften aufweisen.

Die vorliegende Erfindung betrifft weiterhin maschinenlesbaren Programmcode für einen Rechner, wobei der Programmcode Steuerbefehle aufweist, deren Ausführung bewirkt, dass der Rechner ein derartiges Betriebsverfahren ausführt.

Die vorliegende Erfindung betrifft weiterhin einen mit derartigem Programmcode programmierten Rechner.

Aufgabe einer Beizlinie ist es, die zu beizenden Bänder von Zunder zu befreien. Die Schichtdicke des Zunders sowie dessen Zusammensetzung (Phasen: Magnetit = Fe₃O₄, Hämatit = Fe₂O₃, Wüstit = FeO) hängen von der chemischen Zusammensetzung und der Vorgeschichte der Bänder ab.

Um den Durchsatz der Beizlinie zu maximieren und damit die Gesamtprozessdauer zu minimieren und/oder beispielsweise einen Energieverbrauch der Beizlinie zu minimieren, ist es das Ziel, die Verweildauer für zu beizende Bänder in der Beize sowie gegebenenfalls Umrüstzeiten zwischen zwei zu beizenden Bändern so gering wie möglich zu halten. Die optimale Verweildauer eines Bandes in einer Beizlinie wird von der Zunderschicht auf der Oberfläche des jeweiligen Bandes, der Beschaffenheit der Beizlinie, dem Beizmedium (insbesondere der Säurekonzentration) und anderen Betriebsparametern der Beizlinie (beispielsweise der Temperatur des Beizmediums) beeinflusst.

Die optimale Verweildauer und die zugehörigen optimalen Einstellungen der Beizlinie werden in der Regel entweder Tabellen entnommen oder mit Hilfe eines Modells der Beizlinie bestimmt. Das Modell der Beizlinie kann auf mathematisch-physikalischen Gleichungen basieren. Das Modell der Beizlinie kann wiederum aus mehreren Teilmodellen bestehen.

Wenn nacheinander Bänder gebeizt werden sollen, deren Materialeigenschaften sich voneinander unterscheiden, müssen in der Regel jeweils die Betriebsparameter der Beizlinie angepasst werden. Diese Betriebsparameter werden mittels des Modells der Beizlinie derart bestimmt, dass der Durchsatz maximiert und die Gesamtprozessdauer minimiert werden. Das Modell der Beizlinie berücksichtigt bei der Ermittlung der Betriebsparameter der Beizlinie beispielsweise die Materialeigenschaften der Bänder, Produktionsvorgaben und den Zustand der Beizlinie. Das Modell der Beizlinie ermittelt oftmals auch den Energieverbrauch. Insbesondere während Übergangszeiten ist jedoch das Beizergebnis - bezogen auf die Gesamtprozessdauer und/oder den Energieverbrauch - oftmals nicht optimal. Bei einem gegebenen Produktionsplan, d.h. einer gegebenen Sequenz, in der die Bänder gebeizt werden sollen, können die Übergangszeiten einen signifikanten Anteil an der Gesamtprozessdauer darstellen. Zwei unterschiedliche mögliche Produktionspläne, also zwei voneinander verschiedene Sequenzen von Bändern, welche dieselben Bänder in unterschiedlichen Reihenfolgen enthalten, können daher voneinander verschiedene Gesamtprozessdauern und/oder voneinander verschiedene Gesamtenergieverbräuche aufweisen.

Im Stand der Technik ist es bekannt, bei gegebenem Produktionsplan - d.h. bei einer gegebenen Sequenz von Bändern - mittels eines auf mathematisch-physikalischen Gleichungen basierenden Modells der Beizlinie eine jeweilige optimierte Betriebsweise der Beizlinie zu ermitteln und die Beizlinie entsprechend der ermittelten optimierten Betriebsweise zu betreiben.

Im Stand der Technik ist weiterhin bekannt, den Produktionsplan, also die Sequenz als solche, zu optimieren. Im Rahmen dieser Optimierung werden Produktionspläne manuell oder mit Hilfe mathematischer Verfahren generiert. Im Rahmen dieser Generierungen einschließlich ihrer Bewertung werden keine Modelle verwendet, die den Beizprozess beschreiben. Der Energieverbrauch ergibt sich aus dem Produktionsplan und wird nicht optimiert. Zur Erstellung eines "guten" Produktionsplans, d.h. eines Produktionsplans mit niedriger Gesamtprozessdauer und niedrigen Gesamtenergiebedarf, benötigt der Hersteller des Produktionsplans oftmals in erheblichem Umfang Betreiber-Know-how.

Aus der US 6,410,351 B1 ist ein Betriebsverfahren zum Ätzen einer Prozessschicht auf einem Wafer bekannt, wobei eine gegebene Ätzsequenz mit Hilfe von Modellen durchgeführt wird.

Die Aufgabe der vorliegenden Erfindung besteht darin, Möglichkeiten zu schaffen, mittels derer auf einfache und zuverlässige Weise ein optimierter Produktionsplan ermittelt werden kann.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 10.

Erfindungsgemäß weist ein Betriebsverfahren für eine Beizlinie, in der eine Anzahl von zu beizenden Bändern gebeizt werden soll, folgende Schritte auf:
a) ein Rechner setzt eine Anzahl von Sequenzen an, welche jeweils die Anzahl von zu beizenden Bändern und deren anfängliche Materialeigenschaften enthalten,
b) der Rechner ermittelt für die angesetzten Sequenzen mittels eines auf mathematisch-physikalischen Gleichungen basierenden Modells der Beizlinie unter Verwendung von deren anfänglichen Materialeigenschaften eine jeweilige optimierte Betriebsweise der Beizlinie und basierend auf der Betriebsweise mindestens eine jeweilige Maßzahl,
c) solange ein Abbruchkriterium nicht erfüllt ist, variiert der Rechner die angesetzten Sequenzen gemäß einer Änderungsvorschrift und geht zum Schritt b) zurück,
d) sobald das Abbruchkriterium erfüllt ist, wählt der Rechner entweder eine der zuletzt angesetzten Sequenzen aus und veranlasst die Steuerung der Beizlinie gemäß der ausgewählten Sequenz oder bietet einem Bediener mehrere der zuletzt angesetzten Sequenzen zusammen mit ihrer jeweiligen Maßzahl zur Auswahl an, nimmt vom Bediener einen Auswahlbefehl zum Auswählen einer der angebotenen Sequenzen entgegen und veranlasst die Steuerung der Beizlinie gemäß der vom Bediener ausgewählten Sequenz.

Es ist möglich, dass der Rechner im Rahmen des Schrittes a) nur eine einzige Sequenz ansetzt. In diesem Fall variiert der Rechner im Rahmen des Schrittes c) die angesetzte Sequenz. Es ist alternativ möglich, dass der Rechner im Rahmen des Schrittes a) mehrere Sequenzen ansetzt. In diesem Fall behält der Rechner im Rahmen des Schrittes c) für die nachfolgende Iteration in der Regel zumindest die zuvor beste Sequenz bei. Die anderen Sequenzen für die nachfolgende Iteration können nach Bedarf bestimmt werden. Entscheidend ist, dass die Anzahl der Sequenzen und/oder die Sequenzen als solche nach dem Variieren anders ist als zuvor.

Das Modell der Beizlinie ist als solches bekannt. Es wird im Stand der Technik jedoch lediglich verwendet, um bei einer gegebenen Sequenz von Bändern die zugehörige optimierte Betriebsweise der Beizlinie zu ermitteln. Es wird im Stand der Technik hingegen nicht verwendet, um die Sequenz von Bändern als solche zu ermitteln.

Das Abbruchkriterium kann nach Bedarf bestimmt sein. Beispielsweise kann das Abbruchkriterium darin bestehen, dass während einer Anzahl aufeinander folgender Iterationen keine oder nur noch marginale Verbesserungen der besten Maßzahl eingetreten sind. Alternativ oder zusätzlich kann das Abbruchkriterium darin bestehen, dass eine maximale Anzahl von Iterationen vorgegeben ist. Das Abbruchkriterium kann auch darin bestehen, dass eine Sequenz von Bändern ermittelt wird, die als hinreichend gut erachtet wird. Auch Kombinationen dieser Kriterien sind möglich. Entscheidend ist, dass das Abbruchkriterium gewährleistet, dass nur eine endliche Anzahl an Iterationen durchgeführt wird.

Die Materialeigenschaften der Bänder können nach Bedarf bestimmt sein. In der Regel umfassen die Materialeigenschaften der Bänder die chemische Zusammensetzung und/oder Geometrieparameter und/oder eine Vorgeschichte des jeweiligen Bandes. Sie können weitere Parameter umfassen wie beispielsweise Temperaturen und Phasenanteile des Materials, aus dem die Bänder bestehen.

Vorzugsweise nimmt der Rechner zusätzlich auf die Bänder bezogene und/oder auf die Beizlinie bezogene Randbedingungen entgegen und berücksichtigt die Randbedingungen im Rahmen der Ermittlung der jeweiligen optimierten Betriebsweise der Beizlinie und/oder der Variierung der Sequenzen. Die Randbedingungen können beispielsweise, bezogen auf die jeweiligen Bänder, Zeiten umfassen, zu denen die Bänder spätestens gebeizt sein müssen. Weiterhin können die Randbedingungen - eventuell bezogen auf einzelne Bänder - Temperaturen umfassen, welche ein Beizbad aufweisen soll, in dem die Bänder gebeizt werden. Auch können die Randbedingungen Temperaturintervalle beinhalten.

Vorzugsweise nimmt der Rechner einen Anfangszustand der Beizlinie entgegen und berücksichtigt den Anfangszustand der Beizlinie im Rahmen der Ermittlung der jeweiligen optimierten Betriebsweise der Beizlinie und/oder der Variierung der Sequenzen. Der Anfangszustand kann beispielsweise eine (unter Umständen nur anfängliche) chemische Zusammensetzung (insbesondere Säurekonzentration) und/oder eine anfängliche Temperatur des Beizbades oder gegebenenfalls mehrerer Beizbäder und/oder technische Möglichkeiten der Beizlinie umfassen, beispielsweise technisch maximal mögliche Heizrampen.

Es ist möglich, dass der Rechner die Anzahl von Sequenzen im Schritt a) anhand einer mehr oder minder zufälligen, ungeordneten anfänglichen Reihenfolge der Bänder ermittelt. Vorzugsweise ermittelt der Rechner jedoch vor der Ausführung des Schrittes a) eine Anfangssequenz der Bänder und ermittelt sodann die Anzahl von Sequenzen im Schritt a) anhand der Anfangssequenz. Dadurch kann in vielen Fällen von Sequenzen ausgegangen werden, die tendenziell bereits optimiert sind.

Vorzugsweise gehen in die Maßzahlen eine Gesamtprozessdauer und/oder ein Gesamtenergiebedarf der Beizlinie zum Beizen der Anzahl von Bändern gemäß der jeweiligen Sequenz ein. Es sind jedoch auch andere Größen möglich, wie beispielsweise Strafterme für eine Verletzung vorgegebener Randbedingungen oder eine zu große Annäherung an vorgegebene Grenzen.

Es ist möglich, dass der Rechner die angesetzten Sequenzen im Schritt c) in statistischer oder zufälliger Weise variiert. Vorzugsweise jedoch variiert der Rechner die angesetzten Sequenzen im Schritt c) unter Berücksichtigung von im Rahmen des Schrittes b) ermittelten Größen oder Zwischenergebnissen.

Vorzugsweise variiert der Rechner die angesetzten Sequenzen im Schritt c) unter Verwendung von Verfahren der mathematischen Optimierung. Dadurch kann in der Regel auf relativ einfache, schnelle und zuverlässige Weise eine Sequenz von Bändern aufgefunden werden, welche eine optimale oder zumindest eine nahezu optimale Betriebsweise der Beizlinie ermöglicht.

Es ist möglich, dass die Schritte a) bis d) vorab ausgeführt werden, während sich also noch kein Band in der Beizlinie befindet bzw. während sich zwar mindestens ein Band in der Beizlinie befindet, der dieses Band enthaltende Produktionsplan jedoch bereits ermittelt ist und der nunmehr ermittelte Produktionsplan für Bänder ermittelt wird, die sich noch vor der Beizlinie befinden. Es ist jedoch alternativ ebenso möglich, dass die Schritte a) bis d) ausgeführt werden, während sich mindestens ein Band in der Beizlinie befindet, dass das in der Beizlinie befindliche mindestens eine Band in den im Schritt a) angesetzten Sequenzen das erste Band ist und dass das in der Beizlinie befindliche mindestens eine Band in den im Schritt c) variierten Sequenzen das erste Band bleibt. In diesem Fall kann beispielsweise im laufenden Betrieb der Beizlinie auf Änderungen von Randbedingungen reagiert werden, beispielsweise darauf, dass bestimmte Bänder nunmehr vorrangig gebeizt werden sollen und/oder dass ein zuvor gegebener Vorrang wegfällt.

Vorzugsweise werden während der Steuerung der Beizlinie gemäß der ausgewählten Sequenz Betriebsdaten der Beizlinie erfasst und werden das Modell der Beizlinie und/oder die Änderungsvorschrift anhand einer Abweichung der Betriebsdaten der Beizlinie von erwarteten Betriebsdaten der Beizlinie adaptiert. Dadurch sind eine stetig fortschreitende Anpassung des Modells der Beizlinie und eine Optimierung der Änderungsvorschrift möglich.

Die Aufgabe wird weiterhin durch maschinenlesbaren Programmcode mit den Merkmalen des Anspruchs 11 gelöst. Erfindungsgemäß bewirkt die Ausführung der Steuerbefehle, dass der Rechner ein erfindungsgemäßes Betriebsverfahren ausführt. Der Programmcode kann insbesondere auf einem Speichermedium gespeichert sein.

Die Aufgabe wird weiterhin durch einen Rechner mit den Merkmalen des Anspruchs 13 gelöst. Erfindungsgemäß ist der Rechner mit erfindungsgemäßem Programmcode programmiert.

Es ist möglich, dass der Rechner als Steuereinrichtung für eine Beizlinie zum Beizen von Bändern ausgebildet ist. Alternativ kann der Rechner mit einer derartigen Steuereinrichtung datentechnisch verbunden sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Beizlinie,
- FIG 2: ein Ablaufdiagramm,
- FIG 3: ein Modell der Beizlinie und
- FIG 4 bis 8: Ablaufdiagramme.

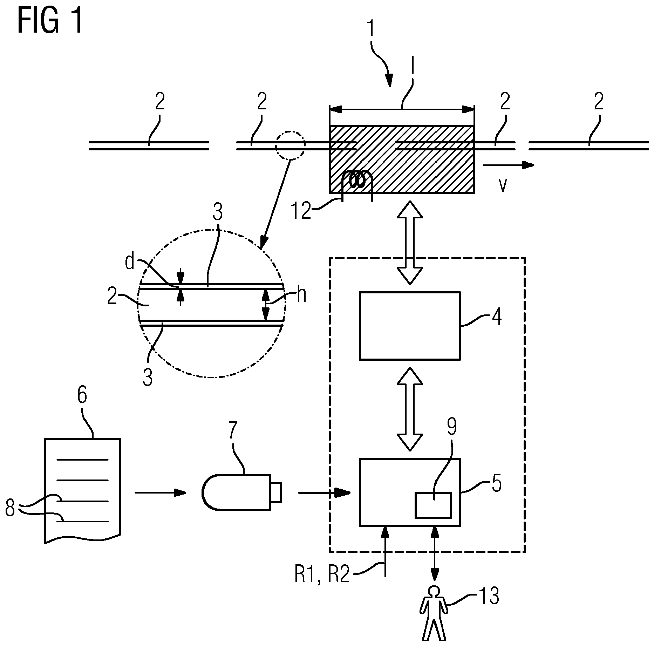

Gemäß FIG 1 soll in (mindestens) einem Beizbad 1 einer Beizlinie eine Anzahl von Bändern 2 gebeizt werden. Die Bänder 2 bestehen aus Metall, beispielsweise aus Stahl. Durch das Beizen soll eine Zunderschicht 3, die eine Schichtdicke d aufweist, entfernt werden. Zu diesem Zweck werden die Bänder 2 nacheinander mit einer Geschwindigkeit v durch das Beizbad 1 transportiert. Die Geschwindigkeit v kann zeitlich konstant sein oder zeitlich variieren. Aus der Geschwindigkeit v in Verbindung mit einer Länge l des Beizbades 1 ergibt sich somit eine jeweilige Verweildauer t.

Die Beizlinie wird von einer Steuereinrichtung 4 gesteuert. Der genaue Aufbau der Steuereinrichtung 4 und deren Wirkungsweise ist im Rahmen der vorliegenden Erfindung von untergeordneter Bedeutung. Entscheidend ist, dass die Steuereinrichtung 4 und ein Rechner 5, dessen Wirkungsweise nachstehend näher erläutert wird, datentechnisch miteinander verbunden sind. Alternativ können die Steuereinrichtung 4 und der Rechner 5 ein und dieselbe Einrichtung sein. In diesem Fall ist der Rechner 5 zugleich als Steuereinrichtung für die Beizlinie ausgebildet. Diese Möglichkeit ist in FIG 1 dadurch angedeutet, dass die Steuereinrichtung 4 und der Rechner 5 gestrichelt umrahmt sind.

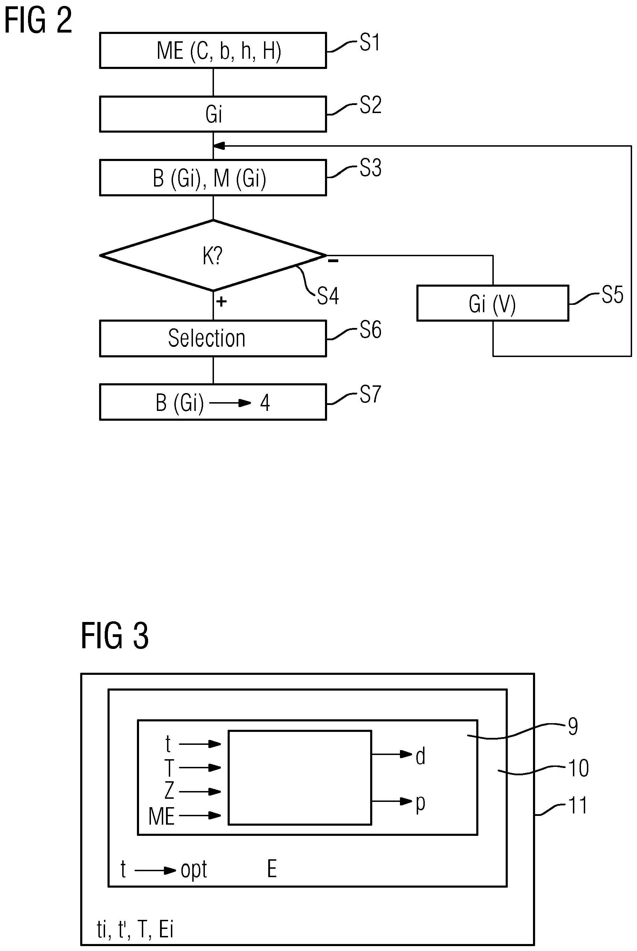

Der Rechner 5 ist mit maschinenlesbarem Programmcode 6 programmiert. Der Programmcode 6 kann dem Rechner 5 beispielsweise über ein Speichermedium 7 zugeführt werden, auf dem der Programmcode 6 in maschinenlesbarer Form - meist in ausschließlich maschinenlesbarer Form, beispielsweise in elektronischer Form - gespeichert ist. Der Programmcode 6 weist Steuerbefehle 8 auf. Die Ausführung der Steuerbefehle 8 bewirkt, dass der Rechner 5 ein Betriebsverfahren ausführt, wie es nachstehend in Verbindung mit FIG 2 näher erläutert wird.

Gemäß FIG 1 nimmt der Rechner 5 in einem Schritt S1 Informationen über eine Anzahl von zu beizenden Bändern 2 entgegen. Die Bänder 2 weisen jeweils anfängliche Materialeigenschaften ME auf. Beispiele von anfänglichen Materialeigenschaften ME sind die chemische Zusammensetzung C des jeweiligen Bandes 2, dessen Geometrieparameter, insbesondere dessen Breite b und dessen Dicke h, und/oder eine Vorgeschichte H des jeweiligen Bandes 2. Die Vorgeschichte H kann insbesondere Aufschluss über eine Temperatur des Bandes 2 und die Schichtdicke d geben. Auch die Materialeigenschaften ME nimmt der Rechner 5 im Rahmen des Schrittes S1 entgegen.

In einem Schritt S2 setzt der Rechner 5 eine Anzahl von Sequenzen Gi (i = 1, 2, 3, ...) an. Die angesetzten Sequenzen Gi enthalten jeweils die Anzahl von zu beizenden Bändern 2. Die Sequenzen Gi stellen also Permutationen der Anzahl von Bändern 2 dar.

In einem Schritt S3 ermittelt der Rechner 5 mittels eines Modells 9 der Beizlinie - siehe FIG 1 und 3 - für die angesetzten Sequenzen Gi eine jeweilige optimierte Betriebsweise B der Beizlinie. Weiterhin ermittelt der Rechner 5 im Schritt S3 mittels des Modells 9 mindestens eine jeweilige Maßzahl M für die jeweilige angesetzte Sequenz Gi. Der Schritt S3 wird nachstehend in Verbindung mit FIG 3 näher erläutert.

Dem Modell 9 werden gemäß FIG 3 für ein bestimmtes Band 2 die entsprechende Verweildauer t des Bandes 2 im Beizbad 1, eine Temperatur T des Beizbades 1, eine Zusammensetzung Z des Beizbades 1 (beispielsweise eine Säurekonzentration) und die Materialeigenschaften ME des betrachteten Bandes 2 vorgegeben. Im Falle mehrerer Beizbäder 1 werden die jeweiligen Größen individuell für das jeweilige Beizbad 1 vorgegeben. Das Modell 9 basiert gemäß FIG 3 auf mathematisch-physikalischen Gleichungen. Bei den Gleichungen kann es sich insbesondere um algebraische Gleichungen und/oder Differenzialgleichungen handeln. Das Modell 9 ermittelt anhand der dem Modell 9 vorgegebenen Größen t, T, Z, ME - also unter anderem unter Verwendung der Materialeigenschaften ME des betrachteten Bandes 2 - unter Anwendung der Gleichungen des Modells 9 die sich ergebende Schichtdicke d der Zunderschicht 2. Gegebenenfalls können zusätzlich auch die zugehörigen Phasenanteile p der Zunderschicht 3 ermittelt werden.

In einer untergeordneten Optimierungsschicht 10 wird sodann für das jeweilige Band 2 die Verweildauer t optimiert, so dass die sich ergebende Schichtdicke d der Zunderschicht 2 auf 0 reduziert ist. Weiterhin wird ein jeweiliger Energiebedarf E ermittelt, der benötigt wird, um die Entzunderung vorzunehmen. Die Optimierung in der untergeordneten Optimierungsschicht 10 erfolgt auf das jeweilige Band 2 bezogen, also ohne andere Bänder 2 zu betrachten.

In einer übergeordneten Optimierungsschicht 11 wird sodann, ausgehend von der Optimierung in der untergeordneten Optimierungsschicht 10 für die einzelnen Bänder 2, eine Optimierung für die jeweilige Sequenz Gi vorgenommen. Im Rahmen der Optimierung in der übergeordneten Optimierungsschicht 11 werden auch Übergänge zwischen den einzelnen Bändern 2 berücksichtigt. Im Ergebnis werden in der übergeordneten Optimierungsschicht 11 zum einen die für die einzelnen Bänder 2 in der unteren Optimierungsschicht 10 ermittelten Verweildauern t variiert, Übergangszeiten t' zwischen einzelnen Bändern 2 ermittelt und berücksichtigt und weiterhin Temperaturen T des Beizbades 1 ermittelt. Die Temperatur T des Beizbades 1 kann beispielsweise durch eine Heizung 12 (siehe FIG 1) oder eine andere Temperaturbeeinflussungseinrichtung bewirkt werden.

Im Rahmen der übergeordneten Optimierungsschicht 11 werden für die betrachtete Sequenz Gi (i = 1, 2, 3, ...) eine jeweilige Gesamtdauer ti (i = 1, 2, 3, ...) und ein jeweiliger Gesamtenergiebedarf Ei (i = 1, 2, 3, ...) ermittelt. Je nach vorgegebenen Optimierungskriterien kann in der übergeordneten Optimierungsschicht 11 beispielsweise versucht werden, die Gesamtdauer ti zu minimieren. Alternativ kann versucht werden, den Gesamtenergiebedarf Ei zu minimieren. Auch Kombinationen sind möglich.

Die Maßzahl M wird vorzugsweise entsprechend den Optimierungskriterien ermittelt. Wenn beispielsweise ausschließlich die Gesamtdauer ti optimiert werden soll, kann als Maßzahl M für die jeweilige Sequenz Gi direkt die Gesamtdauer ti herangezogen werden. Analoges gilt, wenn ausschließlich der Energiebedarf Ei minimiert werden soll. Eine Kombination kann beispielsweise darin bestehen, die jeweilige Gesamtdauer ti und den jeweiligen Gesamtenergiebedarf Ei zu normieren und eine gewichtete oder ungewichtete Addition der normierten Größen als jeweilige Maßzahl M heranzuziehen. Weiterhin kann die jeweilige Maßzahl M auch durch eine sogenannte Kostenfunktion bestimmt sein. Die Kostenfunktion kann beispielsweise auf Materialeigenschaften ME, Produktionsvorgaben, dem Zustand der Beizlinie, der jeweiligen Gesamtprozessdauer ti, dem benötigten Gesamtenergiebedarf Ei und zu beachtenden Randbedingungen R1, R2 (siehe hierzu später) basieren.

In einem Schritt S4 prüft der Rechner 5, ob ein Abbruchkriterium K erfüllt ist. Wenn das Abbruchkriterium K nicht erfüllt ist, geht der Rechner 5 zu einem Schritt S5 über. Im Schritt S5 variiert der Rechner 5 die angesetzten Sequenzen Gi gemäß einer Änderungsvorschrift V. Nach dem Variieren der angesetzten Sequenzen Gi geht der Rechner 5 zum Schritt S3 zurück.

Zum Variieren der angesetzten Sequenzen Gi sind verschiedene Vorgehensweisen möglich. Nachfolgend werden - rein beispielhaft - einige mögliche Vorgehensweisen aufgeführt.

So ist es beispielsweise möglich, dass der Rechner 5 die angesetzten Sequenzen Gi im Schritt S5 unter Berücksichtigung von Größen oder Zwischenergebnissen variiert, die im Rahmen der unmittelbar vorhergehenden Ausführung des Schrittes S3 ermittelt wurden. Weiterhin kann der Rechner 5 die angesetzten Sequenzen Gi im Schritt S5 unter Verwendung von Verfahren der mathematischen Optimierung variieren.

Beispielsweise kann der Rechner 5 im Rahmen genetischer Optimierungsverfahren Schnittstellen innerhalb der Sequenzen Gi ermitteln und die Teile der Sequenzen Gi, die sich durch ein Teilen der Sequenzen Gi an den ermittelten Schnittstellen ergeben, neu zusammensetzen. Auch andere Vorgehensweisen sind möglich, beispielsweise im Rahmen der Anwendung von evolutionären Optimierungsverfahren, Schwarmoptimierungsverfahren oder Ameisenoptimierungsverfahren. Die entsprechenden Verfahren sind Fachleuten allgemein bekannt. Auch ist es alternativ möglich, Randbedingungen zu berücksichtigen oder keine Randbedingungen vorzugeben. Beispiele geeigneter mathematischer Optimierungsverfahren sind
- Verfahren der kontinuierlichen Optimierung wie beispielsweise Simplexverfahren, Innere-Punkte-Verfahren, Trust-Region-Verfahren, Cubic-Overregulization-Verfahren, SLP-Verfahren, SQP-Verfahren sowie Verfahren vom Gauß-/Newton-Typ. Diese Verfahren können nach Bedarf linear oder nicht linear ausgestaltet sein.
- Verfahren der diskreten Optimierung wie beispielsweise Schnittebenenverfahren, Verfahren vom Branch-and-Bound-Typ, Netzwerk-Optimierungsverfahren usw..
- Verfahren der gemischt-ganzzahligen Optimierung, beispielsweise als Kombination kontinuierlicher und diskreter Verfahren.
- Heuristische und metaheuristische Verfahren der Optimierung, beispielsweise genetische Verfahren, evolutionäre Verfahren, Ameisen-Optimierungsverfahren, Schwarm-Optimierungsverfahren, Simulated Annealing und Tabu-Suche.

Alle Verfahren können nach Bedarf ohne Randbedingungen ausgeführt werden oder mit zu beachtenden Randbedingungen ergänzt sein. Sie können eventuell auch miteinander kombiniert werden. Weiterhin kann das mathematische Optimierungsverfahren bereits problemspezifisch ausgestaltet sein.

Wenn das Abbruchkriterium K hingegen erfüllt ist, geht der Rechner 5 zu einem Schritt S6 über. Im Schritt S6 wählt der Rechner 5 eine der zuletzt angesetzten Sequenzen Gi aus. In einem Schritt S7 veranlasst der Rechner 5 die Steuerung der Beizlinie gemäß der ausgewählten Sequenz Gi. Beispielsweise kann der Rechner 5 die entsprechenden Betriebsparameter ermitteln und der Steuerung 4 vorgeben.

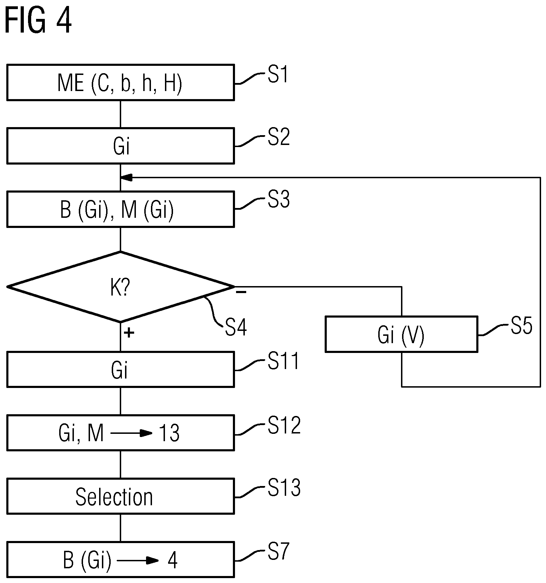

Alternativ ist es gemäß FIG 4 möglich, dass der Schritt S6 von FIG 2 durch Schritte S11 bis S13 ersetzt ist. In diesem Fall wählt der Rechner 5 in einem Schritt S11 mehrere der zuletzt angesetzten Sequenzen Gi aus. Die ausgewählten Sequenzen Gi umfassen zumindest diejenigen der zuletzt angesetzten Sequenzen Gi, welche der Rechner 5 für bevorzugt erachtet. Es ist auch möglich, dass der Rechner 5 alle der zuletzt angesetzten Sequenzen Gi auswählt. Im Schritt S12 bietet der Rechner 5 die von ihm - dem Rechner 5 - im Schritt S11 ausgewählten Sequenzen Gi einem Bediener 13 (siehe FIG 1) zusammen mit ihrer jeweiligen Maßzahl M - und gegebenenfalls weiteren Informationen - zur Auswahl an. Im Schritt S13 nimmt der Rechner 5 vom Bediener 13 einen Auswahlbefehl SEL entgegen. Durch den Auswahlbefehl SEL wählt der Bediener 13 eine der ihm angebotenen Sequenzen Gi aus. Sodann wird mit dem Schritt S7 fortgefahren, in dem der Rechner 5 - wie auch bei FIG 2 - die Steuerung der Beizlinie gemäß der vom Bediener 13 ausgewählten Sequenz Gi veranlasst.

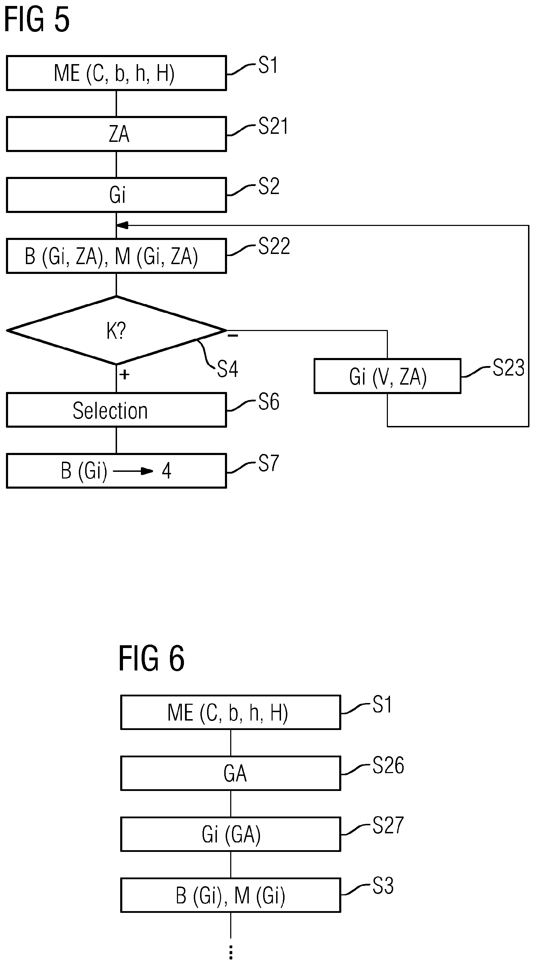

Die erfindungsgemäße Vorgehensweise kann in verschiedener Hinsicht ausgestaltet werden. Eine der Ausgestaltungen wird nachfolgend in Verbindung mit FIG 5 näher erläutert.

FIG 5 baut auf FIG 2 auf. Sie könnte jedoch auch auf der Modifikation gemäß FIG 4 aufbauen. Gemäß FIG 5 ist dem Schritt S1 ein Schritt S21 vorgeordnet oder nachgeordnet. Im Schritt S21 nimmt der Rechner 5 einen Anfangszustand ZA der Beizlinie entgegen, insbesondere einen Anfangszustand des Beizbades 1 wie beispielsweise die Temperatur T und die chemische Zusammensetzung Z des Beizbades 1. Wenn der Schritt S21 vorhanden ist, kann der Schritt S3 durch einen Schritt S22 ersetzt sein. Im Schritt S22 realisiert der Rechner 5 die gleiche Vorgehensweise wie im Schritt S3 von FIG 2 bzw. FIG 4. Zusätzlich berücksichtigt der Rechner 5 jedoch den Anfangszustand ZA im Rahmen der Ermittlung der jeweiligen optimierten Betriebsweise B der Beizlinie. Alternativ oder zusätzlich kann der Schritt S5 durch einen Schritt S23 ersetzt sein. Im Schritt S23 realisiert der Rechner 5 die gleiche Vorgehensweise wie im Schritt S5 von FIG 2 bzw. FIG 4. Zusätzlich berücksichtigt der Rechner 5 jedoch den Anfangszustand ZA im Rahmen der Variierung der Sequenzen Gi.

Der Anfangszustand ZA kann dem Rechner 5 auf prinzipiell beliebige Weise bekannt werden. Beispielsweise können mittels der Steuereinrichtung 4 oder auf andere Weise entsprechende Daten gemessen und an den Rechner 5 übermittelt werden. Alternativ können die Daten mittels des Modells 9 der Beizlinie oder eines anderen Modells (in den FIG nicht dargestellt) ermittelt werden. Auch ist es möglich, dass die entsprechenden Daten dem Rechner 5 vom Bediener 13 vorgegeben werden.

Nachfolgend wird in Verbindung mit FIG 6 eine weitere mögliche Ausgestaltung erläutert. Auch die Ausgestaltung gemäß FIG 6 baut auf der Vorgehensweise von FIG 2 auf. Sie könnte jedoch auch auf der Modifikation gemäß FIG 4 aufbauen. Weiterhin kann die Ausgestaltung gemäß FIG 6 mit der Ausgestaltung von FIG 5 kombiniert sein. Sie ist jedoch ebenso ohne die Ausgestaltung gemäß FIG 5 realisierbar.

Gemäß FIG 6 ist dem Schritt S1 ein Schritt S26 nachgeordnet. Im Schritt S26 ermittelt der Rechner 5 eine Anfangssequenz GA der Bänder 2. In diesem Fall ist der Schritt S2 von FIG 2 bzw. FIG 4 durch einen Schritt S27 ersetzt. Im Schritt S27 ermittelt der Rechner 5 die Anzahl von Sequenzen Gi anhand der Anfangssequenz GA.

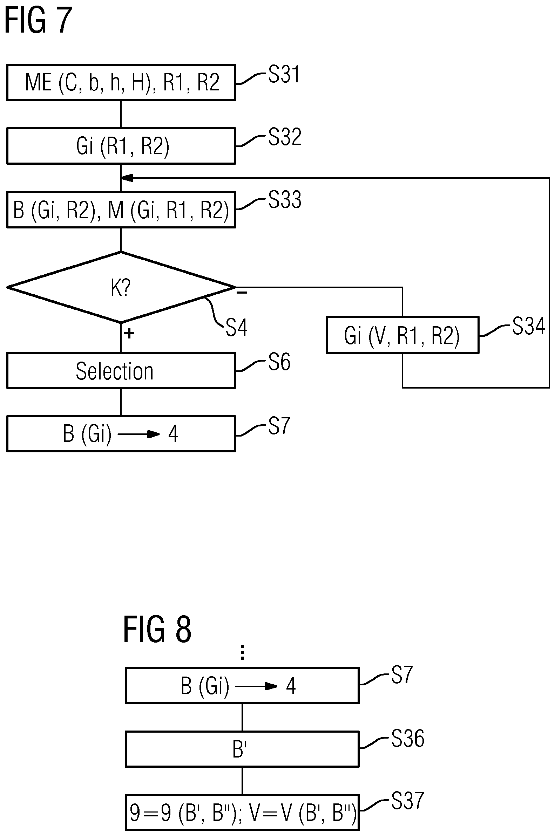

Auch FIG 7 zeigt eine weitere mögliche Ausgestaltung der erfindungsgemäßen Vorgehensweise. Auch die Ausgestaltung gemäß FIG 7 baut auf der Vorgehensweise von FIG 2 auf. Sie könnte jedoch auch auf der Modifikation gemäß FIG 4 aufbauen. Weiterhin kann die Ausgestaltung gemäß FIG 7 mit der Ausgestaltung von FIG 5 und/oder FIG 6 kombiniert sein. Sie ist jedoch ebenso ohne die Ausgestaltung gemäß FIG 5 und/oder FIG 6 realisierbar.

Gemäß FIG 7 ist der Schritt S1 durch einen Schritt S31 ersetzt. Im Schritt S31 nimmt der Rechner 5 - so wie auch im Schritt S1 - Informationen über die Anzahl von zu beizenden Bändern 2 und auch die Materialeigenschaften ME der Bänder 2 entgegen. Zusätzlich nimmt der Rechner 5 Randbedingungen R1 und/oder R2 entgegen. Die Randbedingungen R1 sind auf die Bänder 2 bezogen. Beispielsweise können die Randbedingungen R1 Produktionsvorgaben umfassen, bis zu welchem Zeitpunkt bestimmte der Bänder 2 gebeizt sein müssen. Die Randbedingungen R2 sind auf die Beizlinie bezogen. Beispielsweise können die Randbedingungen R2 eine maximal mögliche Temperaturänderung sowie eine minimal mögliche und eine maximal mögliche Temperatur des Beizbades 1 umfassen.

Wenn der Schritt S31 vorhanden ist, kann der Schritt S2 durch einen Schritt S32 ersetzt sein. Im Schritt S32 realisiert der Rechner 5 die gleiche Vorgehensweise wie im Schritt S2 von FIG 2 bzw. FIG 4. Zusätzlich berücksichtigt der Rechner 5 jedoch die auf die Bänder 2 bezogenen Randbedingungen R1 und/ oder die auf die Beizlinie bezogenen Randbedingungen R2 im Rahmen der Ermittlung der Sequenzen Gi. Alternativ oder zusätzlich kann der Schritt S3 durch einen Schritt S33 ersetzt sein. Im Schritt S33 realisiert der Rechner 5 die gleiche Vorgehensweise wie im Schritt S3 von FIG 2 bzw. FIG 4. Zusätzlich berücksichtigt der Rechner 5 jedoch die auf die Beizlinie bezogenen Randbedingungen R2 im Rahmen der Ermittlung der jeweiligen optimierten Betriebsweise der Beizlinie. Eventuell kann der Rechner 5 zusätzlich auch die auf die Bänder 2 bezogenen Randbedingungen R1 berücksichtigen. Alternativ oder zusätzlich kann der Schritt S5 durch einen Schritt S34 ersetzt sein. Im Schritt S34 realisiert der Rechner 5 die gleiche Vorgehensweise wie im Schritt S5 von FIG 2 bzw. FIG 4. Zusätzlich berücksichtigt der Rechner 5 jedoch im Rahmen der Variierung der Sequenzen Gi zumindest die auf die Bänder 2 bezogenen Randbedingungen R1. Eventuell kann der Rechner 5 zusätzlich auch die auf die Beizlinie bezogenen Randbedingungen R2 berücksichtigen.

Es ist - selbstverständlich - möglich, zuerst das erfindungsgemäße Betriebsverfahren (gemäß den FIG 2 bis 7) auszuführen und erst danach die Steuerung der Beizlinie entsprechend der ausgewählten Sequenz Gi zu veranlassen. Es ist jedoch ebenso möglich, das erfindungsgemäße Betriebsverfahren auszuführen, während sich bereits ein Band 2 in der Beizlinie befindet. Beispielsweise kann sich das entsprechende Band 2 bereits in einer Einspeiselinie vor dem Beizbad 1 bzw. im Falle mehrerer Beizbäder 1 vor dem ersten Beizbad 1 befinden. Falls in diesem Fall dieses Band 2 in den Sequenzen Gi enthalten sein soll, muss jedoch das in der Beizlinie befindliche Band 2 in den im Schritt S2 angesetzten Sequenzen Gi das erste Band 2 sein. Weiterhin muss in diesem Fall das in der Beizlinie befindliche Band 2 in den im Schritt S5 variierten Sequenzen Gi das erste Band 2 bleiben.

Die gleiche Vorgehensweise kann auch ergriffen werden, wenn sich bereits mehrere Bänder 1 in der Beizlinie befinden. In diesem Fall sind die oben genannten Aussagen für alle Bänder 2 gültig, die sich bereits in der Beizlinie befinden. Weiterhin muss in diesem Fall die Reihenfolge der Bänder 2, die sich bereits in der Beizlinie befinden, beibehalten werden.

Es ist weiterhin möglich, die Vorgehensweise gemäß FIG 2 (bzw. FIG 4) so auszugestalten, wie dies nachfolgend in Verbindung mit FIG 8 näher erläutert wird. Auch die Ausgestaltung gemäß FIG 8 kann nach Bedarf mit einer oder mehreren der Ausgestaltungen gemäß den FIG 5, 6 und 7 kombiniert werden. Gemäß FIG 8 nimmt der Rechner 5 im Anschluss an die Ausführung des Schrittes S7 in einem Schritt S36 von der Steuereinrichtung 4 tatsächliche Betriebsdaten B' der Beizlinie entgegen. Diese Daten wurden zuvor von der Steuereinrichtung 4 erfasst, während die Steuereinrichtung 4 die Beizlinie gemäß der im Schritt S7 ausgewählten Sequenz Gi gesteuert hat. In einem Schritt S37 vergleicht der Rechner 5 die tatsächlichen Betriebsdaten B' mit erwarteten Betriebsdaten B", die aufgrund des Modells 9 der Beizlinie ermittelt wurden. Weiterhin adaptiert der Rechner 5 im Schritt S37 das Modell 9 der Beizlinie und/oder die Änderungsvorschrift V anhand einer Abweichung der Betriebsdaten B' der Beizlinie von den erwarteten Betriebsdaten B" der Beizlinie.

Zusammengefasst betrifft die vorliegende Erfindung somit folgenden Sachverhalt:
In einer Beizlinie soll eine Anzahl von Bändern 2 gebeizt werden, die anfängliche Materialeigenschaften ME aufweisen. Hierzu setzt ein Rechner 5 eine Anzahl von Sequenzen Gi an, welche jeweils die Anzahl von zu beizenden Bändern 2 enthalten. Der Rechner 5 ermittelt für die angesetzten Sequenzen Gi mittels eines auf mathematisch-physikalischen Gleichungen basierenden Modells 9 der Beizlinie unter Verwendung von deren anfänglichen Materialeigenschaften ME eine jeweilige optimierte Betriebsweise der Beizlinie und basierend auf der Betriebsweise mindestens eine jeweilige Maßzahl M. Solange ein Abbruchkriterium K nicht erfüllt ist, variiert der Rechner 5 die angesetzten Sequenzen Gi und ermittelt erneut jeweilige optimierte Betriebsweisen der Beizlinie und zugehörige Maßzahlen M. Sobald das Abbruchkriterium K erfüllt ist, wählt der Rechner 5 entweder eine der zuletzt angesetzten Sequenzen Gi aus und veranlasst die Steuerung der Beizlinie gemäß der ausgewählten Sequenz Gi oder bietet einem Bediener 13 mehrere der zuletzt angesetzten Sequenzen Gi zusammen mit ihrer jeweiligen Maßzahl M zur Auswahl an, nimmt vom Bediener 13 einen Auswahlbefehl SEL zum Auswählen einer der angebotenen Sequenzen Gi entgegen und veranlasst die Steuerung der Beizlinie gemäß der vom Bediener 13 ausgewählten Sequenz Gi.

Die vorliegende Erfindung weist viele Vorteile auf. Insbesondere ist auf einfache und zuverlässige Weise eine bessere Optimierung des Produktionsplans als im Stand der Technik möglich. Weiterhin wird für die Optimierung kein Betreiber-Know-how, das heißt Know-how des Betreibers der Beizlinie, benötigt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Beizlinie, in der eine Anzahl von zu beizenden Bändern (2) gebeizt werden soll, die jeweils die anfängliche Materialeigenschaften (ME) aufweisen, wobei das Betriebsverfahren folgende Schritte aufweist:
a) ein Rechner (5) setzt eine Anzahl von Sequenzen (Gi) an, welche jeweils die Anzahl von zu beizenden Bändern (2) enthalten,
b) der Rechner (5) ermittelt für die angesetzten Sequenzen (Gi) mittels eines auf mathematisch-physikalischen Gleichungen basierenden Modells (9) der Beizlinie unter Verwendung von deren anfänglichen Materialeigenschaften (ME) eine jeweilige optimierte Betriebsweise der Beizlinie und basierend auf der Betriebsweise mindestens eine jeweilige Maßzahl (M),
c) solange ein Abbruchkriterium (K) nicht erfüllt ist, variiert der Rechner (5) die angesetzten Sequenzen (Gi) gemäß einer Änderungsvorschrift und geht zum Schritt b) zurück,
d) sobald das Abbruchkriterium (K) erfüllt ist, wählt der Rechner (5) entweder eine der zuletzt angesetzten Sequenzen (Gi) aus und veranlasst die Steuerung der Beizlinie gemäß der ausgewählten Sequenz (Gi) oder bietet einem Bediener (13) mehrere der zuletzt angesetzten Sequenzen (Gi) zusammen mit ihrer jeweiligen Maßzahl (M) zur Auswahl an, nimmt vom Bediener (13) einen Auswahlbefehl (SEL) zum Auswählen einer der angebotenen Sequenzen (Gi) entgegen und veranlasst die Steuerung der Beizlinie gemäß der vom Bediener (13) ausgewählten Sequenz (Gi),
wobei als Abbruchkriterium (K) nach Bedarf bestimmt sein kann:
• dass keine oder nur marginale Verbesserungen der besten Maßzahl (M) während einer Anzahl aufeinander folgender Iterationen eingetreten sind, und/oder
• dass eine vorgegebene maximale Anzahl von Iterationen erreicht wurde und/oder
• dass eine Sequenz von Bändern ermittelt wird, die als hinreichend gut erachtet wird.

2. Betriebsverfahren nach Anspruch 1,
**dadurch gekennzeichnet,**
**dass** die Materialeigenschaften (ME) der Bänder (2) die chemische Zusammensetzung (C) und/oder Geometrieparameter (b, h) und/oder eine Vorgeschichte (H) des jeweiligen Bandes (2) umfassen.

3. Betriebsverfahren nach Anspruch 1 oder 2,
**dadurch gekennzeichnet,**
**dass** der Rechner (5) zusätzlich auf die Bänder (2) bezogene und/oder auf die Beizlinie bezogene Randbedingungen (R1, R2) entgegennimmt und dass der Rechner (5) die Randbedingungen (R1, R2) im Rahmen der Ermittlung der jeweiligen optimierten Betriebsweise der Beizlinie und/oder der Variierung der Sequenzen (Gi) berücksichtigt.

4. Betriebsverfahren nach Anspruch 1, 2 oder 3,
**dadurch gekennzeichnet,**
**dass** der Rechner (5) einen Anfangszustand (ZA) der Beizlinie entgegennimmt und den Anfangszustand (ZA) der Beizlinie im Rahmen der Ermittlung der jeweiligen optimierten Betriebsweise der Beizlinie und/oder der Variierung der Sequenzen (Gi) berücksichtigt.

5. Betriebsverfahren nach einem der obigen Ansprüche,
**dadurch gekennzeichnet,**
**dass** der Rechner (5) vor der Ausführung des Schrittes a) eine Anfangssequenz (GA) der Bänder (2) ermittelt und dass der Rechner (5) die Anzahl von Sequenzen (Gi) im Schritt a) anhand der Anfangssequenz (GA) ermittelt.

6. Betriebsverfahren nach einem der obigen Ansprüche,
**dadurch gekennzeichnet,**
**dass** in die Maßzahlen (M) eine Gesamtprozessdauer (ti) und/oder ein Gesamtenergiebedarf (Ei) der Beizlinie zum Beizen der Anzahl von Bändern (2) gemäß der jeweiligen Sequenz (Gi) eingehen.

7. Betriebsverfahren nach einem der obigen Ansprüche,
**dadurch gekennzeichnet,**
**dass** der Rechner (5) die angesetzten Sequenzen (Gi) im Schritt c) unter Berücksichtigung von im Rahmen des Schrittes b) ermittelten Größen oder Zwischenergebnissen variiert.

8. Betriebsverfahren nach einem der obigen Ansprüche,
**dadurch gekennzeichnet,**
**dass** der Rechner (5) die angesetzten Sequenzen (Gi) im Schritt c) unter Verwendung von Verfahren der mathematischen Optimierung variiert.

9. Betriebsverfahren nach einem der obigen Ansprüche,
**dadurch gekennzeichnet,**
**dass** die Schritte a) bis d) ausgeführt werden, während sich bereits ein Band (2) in der Beizlinie befindet, dass das in der Beizlinie befindliche Band (2) in den im Schritt a) angesetzten Sequenzen (Gi) das erste Band (2) ist und dass das in der Beizlinie befindliche Band (2) in den im Schritt c) variierten Sequenzen (Gi) das erste Band (2) bleibt.

10. Betriebsverfahren nach einem der obigen Ansprüche,
**dadurch gekennzeichnet,**
**dass** während der Steuerung der Beizlinie gemäß der ausgewählten Sequenz (Gi) Betriebsdaten der Beizlinie erfasst werden und dass das Modell (9) der Beizlinie und/oder die Änderungsvorschrift anhand einer Abweichung der Betriebsdaten der Beizlinie von erwarteten Betriebsdaten der Beizlinie adaptiert werden.

11. Maschinenlesbarer Programmcode für einen Rechner (5), wobei der Programmcode Steuerbefehle (8) aufweist, deren Ausführung bewirkt, dass der Rechner (5) ein Betriebsverfahren nach einem der obigen Ansprüche ausführt.

12. Programmcode nach Anspruch 11,
**dadurch gekennzeichnet,**
**dass** der Programmcode auf einem Speichermedium (7) gespeichert ist.

13. Mit Programmcode (6) nach Anspruch 11 programmierter Rechner.

14. Rechner nach Anspruch 13,
**dadurch gekennzeichnet,**
**dass** der Rechner als Steuereinrichtung (4) für eine Beizlinie zum Beizen von Bändern (2) ausgebildet ist oder mit einer derartigen Steuereinrichtung (4) datentechnisch verbunden ist.

## Claims

1. Operating method for a pickling line in which a number of strips (2) to be pickled that respectively have the initial material properties (ME) are to be pickled, the operating method having the following steps:
a) a computer (5) sets a number of sequences (Gi), which respectively contain the number of strips (2) to be pickled,
b) the computer (5) determines for the set sequences (Gi) a respective optimized operating mode of the pickling line by means of a model (9) of the pickling line based on mathematical-physical equations and by using their initial material properties (ME) and determines at least one respective measure (M) on the basis of the operating mode,
c) as long as a termination criterion (K) is not satisfied, the computer (5) varies the set sequences (Gi) according to an amendment specification and returns to step b),
d) as soon as the termination criterion (K) is satisfied, the computer (5) either selects one of the last-set sequences (Gi) and initiates the control of the pickling line according to the selected sequence (Gi) or offers a number of the last-set sequences (Gi) together with their respective measure (M) to an operator (13) for selection, receives from the operator (13) a selection command (SEL) for selecting one of the sequences (Gi) offered and initiates the control of the pickling line according to the sequence (Gi) selected by the operator (13),
it being possible for the following to be determined according to requirements as the termination criterion (K):
• that no improvements or only marginal improvements of the best measure (M) have occurred during a number of successive iterations, and/or
• that a specified maximum number of iterations has been reached and/or
• that a sequence of strips that is deemed to be sufficiently good is determined.

2. Operating method according Claim 1,
**characterized**
**in that** the material properties (ME) of the strips (2) comprise the chemical composition (C) and/or geometrical parameters (b, h) and/or a pre-history (H) of the respective strip (2).

3. Operating method according to Claim 1 or 2,
**characterized in that** the computer (5) additionally receives boundary conditions (R1, R2) with respect to the strips (2) and/or with respect to the pickling line and **in that** the computer (5) makes allowance for the boundary conditions (R1, R2) in the course of the determination of the respective optimized operating mode of the pickling line and/or the variation of the sequences (Gi).

4. Operating method according to Claim 1, 2 or 3,
**characterized**
**in that** the computer (5) receives an initial state (ZA) of the pickling line and makes allowance for the initial state (ZA) of the pickling line in the course of the determination of the respective optimized operating mode of the pickling line and/or the variation of the sequences (Gi).

5. Operating method according to one of the above claims,
**characterized**
**in that** the computer (5) determines an initial sequence (GA) of the strips (2) before the implementation of step a) and in that the computer (5) determines the number of sequences (Gi) in step a) on the basis of the initial sequence (GA).

6. Operating method according to one of the above claims,
**characterized**
**in that** the measures (M) incorporate an overall time for the process (ti) and/or an overall energy requirement (Ei) of the pickling line for pickling the number of strips (2) according to the respective sequence (Gi).

7. Operating method according to one of the above claims,
**characterized**
**in that** the computer (5) varies the set sequences (Gi) in step c) by making allowance for variables or interim results determined in the course of step b).

8. Operating method according to one of the above claims,
**characterized**
**in that** the computer (5) varies the set sequences (Gi) in step c) by using methods of mathematical optimization.

9. Operating method according to one of the above claims,
**characterized**
**in that** steps a) to d) are implemented while a strip (2) is already in the pickling line, in that the strip (2) in the pickling line is the first strip (2) in the sequences (Gi) set in step a) and in that the strip (2) in the pickling line remains the first strip (2) in the sequences (Gi) varied in step c).

10. Operating method according to one of the above claims,
**characterized**
**in that** operating data of the pickling line are recorded during the control of the pickling line according to the selected sequence (Gi) and in that the model (9) of the pickling line and/or the amendment specification is/are adapted on the basis of a deviation of the operating data of the pickling line from expected operating data of the pickling line.

11. Machine-readable program code for a computer (5), the program code comprising control commands (8), the implementation of which has the effect that the computer (5) performs an operating method according to one of the above claims.

12. Program code according to Claim 11,
**characterized**
**in that** the program code is stored on a storage medium (7).

13. Computer programmed with program code (6) according to Claim 11.

14. Computer according to Claim 13,
**characterized in that** the computer is formed as a control device (4) for a pickling line for pickling strips (2) or is connected in terms of data technology to such a control device (4) .

## Revendications

1. Procédé de fonctionnement pour une ligne de décapage dans laquelle un certain nombre de bandes (2) à décaper qui possèdent respectivement les propriétés de matériau (ME) initiales doivent être décapées, le procédé de fonctionnement comprenant les étapes suivantes :
a) - un ordinateur (5) fixe un nombre de séquences (Gi), lesquelles contiennent respectivement le nombre de bandes (2) à décaper,
b) l'ordinateur (5) détermine pour les séquences (Gi) fixées, au moyen d'un modèle (9) se basant sur des équations mathématico-physiques de la ligne de décapage à l'aide des propriétés de matériau (ME) initiales de celles-ci, un mode de fonctionnement optimisé respectif de la ligne de décapage, et en se basant sur le mode de fonctionnement au moins une valeur de mesure (M) respective,
c) tant qu'un critère d'interruption (K) n'est pas rempli, l'ordinateur (5) fait varier les séquences (Gi) fixées selon une instruction de modification et retourne à l'étape b),
d) dès que le critère d'interruption (K) est rempli, l'ordinateur (5) soit sélectionne l'une des séquences (Gi) fixées en dernier lieu et déclenche la commande de la ligne de décapage selon la séquence (Gi) sélectionnée, soit propose à un opérateur (13) à la sélection plusieurs des séquences (Gi) fixées en dernier lieu conjointement avec leur valeur de mesure (M) respective, reçoit de la part de l'opérateur (13) un ordre de sélection (SEL) pour la sélection de l'une des séquences (Gi) proposées et déclenche la commande de la ligne de décapage selon la séquence (Gi) sélectionnée par l'opérateur (13),
dans lequel, en tant que critère d'interruption (K), il peut être déterminé en fonction des besoins :
• qu'il ne s'est produit aucune amélioration, ou que des améliorations marginales, de la meilleure valeur de mesure (M) pendant un certain nombre d'itérations successives, et/ou
• qu'un nombre maximal prédéfini d'itérations a été atteint et/ou
• qu'il est déterminé une séquence de bandes qui est considérée comme étant suffisamment bonne.

2. Procédé de fonctionnement selon la revendication 1, **caractérisé en ce que** les propriétés de matériau (ME) des bandes (2) incluent la composition chimique (C) et/ou des paramètres géométriques (b, h) et/ou un historique (H) de la bande (2) respective.

3. Procédé de fonctionnement selon la revendication 1 ou la revendication 2, **caractérisé en ce que** l'ordinateur (5) reçoit en outre des conditions périphériques (R1, R2) relatives aux bandes (2) et/ou relatives à la ligne de décapage, et **en ce que** l'ordinateur (5) prend en considération les conditions périphériques (R1, R2) dans le cadre de la détermination du mode de fonctionnement optimisé respectif de la ligne de décapage et/ou de la variation des séquences (Gi).

4. Procédé de fonctionnement selon la revendication 1, la revendication 2 ou la revendication 3, **caractérisé en ce que** l'ordinateur (5) reçoit un état initial (ZA) de la ligne de décapage et prend en considération l'état initial (ZA) de la ligne de décapage dans le cadre de la détermination du mode de fonctionnement optimisé respectif de la ligne de décapage et/ou de la variation des séquences (Gi).

5. Procédé de fonctionnement selon l'une des revendications précédentes, **caractérisé en ce que** l'ordinateur (5) détermine avant l'exécution de l'étape a) une séquence initiale (GA) des bandes (2), et **en ce que** l'ordinateur (5) détermine le nombre de séquences (Gi) dans l'étape a) à partir de la séquence initiale (GA).

6. Procédé de fonctionnement selon l'une des revendications précédentes, **caractérisé en ce que** dans les valeurs de mesure (M) entrent une durée de processus totale (ti) et/ou un besoin en énergie total (Ei) de la ligne de décapage pour le décapage du nombre de bandes (2) selon la séquence (Gi) respective.

7. Procédé de fonctionnement selon l'une des revendications précédentes, **caractérisé en ce que** l'ordinateur (5) fait varier dans l'étape c) les séquences (Gi) fixées en prenant en considération des grandeurs ou résultats intermédiaires déterminés dans le cadre de l'étape b).

8. Procédé de fonctionnement selon l'une des revendications précédentes, **caractérisé en ce que** l'ordinateur (5) fait varier dans l'étape c) les séquences (Gi) fixées en utilisant le procédé de l'optimisation mathématique.

9. Procédé de fonctionnement selon l'une des revendications précédentes, **caractérisé en ce que** les étapes a) à d) sont exécutées alors qu'une bande (2) se trouve déjà dans la ligne de décapage, **en ce que** la bande (2) qui se trouve dans la ligne de décapage est la première bande (2) dans les séquences (Gi) fixées dans l'étape a), et **en ce que** la bande (2) qui se trouve dans la ligne de décapage reste la première bande (2) dans les séquences (Gi) amenées à varier dans l'étape c).

10. Procédé de fonctionnement selon l'une des revendications précédentes, **caractérisé en ce que** des données de fonctionnement de la ligne de décapage sont détectées pendant la commande de la ligne de décapage selon la séquence (Gi) sélectionnée, et **en ce que** le modèle (9) de la ligne de décapage et/ou l'instruction de modification sont adaptés à partir d'un écart des données de fonctionnement de la ligne de décapage avec des données de fonctionnement attendues de la ligne de décapage.

11. Code de programme lisible par machine pour un ordinateur (5), dans lequel le code de programme comprend des ordres de commande (8) dont l'exécution amène l'ordinateur (5) à exécuter un procédé de fonctionnement selon l'une des revendications précédentes.

12. Code de programme selon la revendication 11, **caractérisé en ce que** le code de programme est stocké sur un support de stockage (7).

13. Ordinateur programmé avec un code de programme (6) selon la revendication 11.

14. Ordinateur selon la revendication 13, **caractérisé en ce que** l'ordinateur est conçu sous la forme d'un dispositif de commande (4) pour une ligne de décapage destinée au décapage de bandes (2) ou est relié informatiquement à un tel dispositif de commande (4).
